# EUROPEAN PATENT APPLICATION

(11) **EP 4 329 246 A1**
(43) Date of publication of application: **28.02.2024**
(21) Application number: 23192764.1
(22) Date of filing: 22.08.2023
(51) Int. Cl.: H04L 9/40, G06F 21/55

(54) **SYSTEM AND METHOD TO QUANTIFY DOMAIN-CENTRIC RISK**

(30) Priority: 23.08.2022 US 202263373304 P
(71) Applicant: Alfahive Inc., South Plainfield, NJ 07080 (US)
(72) Inventor: Lamar, Jason, South Plainfield, 07080 (US); McGowan, Isaiah, South Plainfield, 07080 (US); KM, Madhusudhan, 560001 Bengaluru (IN); Bansal, Saurabh, 560001 Bengaluru (IN); Raghavan, Randhish, 560001 Bengaluru (IN); Kotwal, Aditya, 440022 Nagpur (IN); Deopujari, Ambarish, 440022 Nagpur (IN); Dhok, Dimple, 440022 Nagpur (IN); Sharma, Jyotsna, 440022 Nagpur (IN)
(74) Representative: Gulde & Partner

(57) **Abstract**

According to an embodiment, a method to quantify domain-centric risk is disclosed. The method comprises: receiving at least one first input associated with a loss event frequency from at least one first external source in a Risk assessment engine; receiving at least one second input associated with a Loss Magnitude from at least one second external source in the Risk assessment engine; receiving at least one third input associated with a plurality of domain-centric entities from at least one third external source in the Risk assessment engine; analyzing the loss event frequency, the loss magnitude, and the at least one third input to quantify the risk associated with a target domain-centric entity; and generating a risk assessment report for the target domain-centric entity based on the analysis of the loss event frequency, the loss magnitude, and the at least one third input.

## Description

### TECHNICAL FIELD

The present disclosure relates to cyber risk. More particularly, the present disclosure relates to a system and method to quantify a domain-centric risk based on an Open Factor Analysis of Information Risk (FAIR) ontology from the Open Group.

### BACKGROUND

The following description of the related art is intended to provide background information pertaining to the field of the disclosure. This section may include certain aspects of the art that may be related to various features of the present disclosure. However, it should be appreciated that this section is used only to enhance the understanding of the reader concerning the present disclosure, and not as an admission of the prior art.

The present disclosure is in the field of Cybersecurity. The area of the invention identified is Cyber risk quantification methods which is based on a FAIR ontology. With the multi-fold increase in cyber-attacks and the losses that enterprises are incurring, proactive cyber risk management is seen as the need of the hour. Industrial stakeholders are increasingly looking for financial support and measures of return for security investments even as security consumes larger portions of Information Technology (IT) budgets.

Businesses adopting risk quantification are looking for substantial improvements beyond the basic ontology and framework of FAIR to include ways of programmatically feeding the model valuable inputs such that minimally trained talent and part-time roles who support the management of model inputs may repeatedly achieve quantified risk assessments.

The model based solely on FAIR ontologies of controls is not specific enough to draw connections between risk management and control management business functions. The model does not provide the links between the frequency and magnitude of related loss events or the likelihood of events & their impact and Business Key Performance Indicators (KPIs).

Accordingly, in light of the aforementioned problems, drawbacks and several other inherent shortcomings in the existing arts, there is a need to provide an improved robust method for cyber risks quantification for assessing non-technical reasons for being susceptible to cyber-attacks like business policies, credentials and procedures resulting in losses that the enterprises are incurring.

### SUMMARY

This section is provided to introduce certain aspects of the present disclosure in a simplified form that are further described below in the detailed description. This summary is not intended to identify the key features or the scope of the claimed subject matter.

The present disclosure provides a domain-centric cyber risk quantification model based on an open FAIR ontology. One aspect of the present disclosure relates to a method to quantify a domain-centric risk. The method includes receiving, at a processor, at least one first input associated with a loss event frequency from at least one first external source in a Risk Assessment Engine. The method further includes receiving, by the processor, at least one second input associated with a Loss Magnitude from at least one second external source in the Risk Assessment Engine. The method further includes receiving, by the processor, at least one third input associated with a plurality of domain-centric entities from at least one third external source in the Risk Assessment Engine. Thereafter, the method further includes analyzing, by the processor, the loss event frequency, the loss magnitude, and the at least one third input to quantify the risk associated with a target domain-centric entity; and generating, by the processor, a risk assessment report for the target domain-centric entity based on the analysis of the loss event frequency, the loss magnitude, and the at least one third input.

Another aspect of the present disclosure relates to a system for quantifying a domain-centric risk. The System includes a processor; and a memory, the memory coupled to the processor. The memory stores instructions being executed by the processor. The processor is configured to receive at least one first input associated with a loss event frequency from at least one first external source in a Risk Assessment Engine. The processor is further configured to receive at least one second input associated with a Loss Magnitude from at least one second external source in the Risk Assessment Engine. The processor is further configured to receive at least one third input associated with a plurality of domain-centric entities from at least one third external source in the Risk Assessment Engine. Thereafter, the processor is further configured to analyze the loss event frequency, the loss magnitude, and the at least one third input to quantify the risk associated with a target domain-centric entity; and generate a risk assessment report for the target domain-centric entity based on the analysis of the loss event frequency, the loss magnitude, and the at least one third input.

According to yet another aspect of the present disclosure, a non-transitory computer-readable storage medium storing instructions for quantifying a domain-centric risk is disclosed. The instructions include executable code which, when executed by a processor, may cause the processor to: receive at least one first input associated with a loss event frequency from at least one first external source in a Risk assessment engine; receive at least one second input associated with a Loss Magnitude from at least one second external source in the Risk assessment engine; receive at least one third input associated with a plurality of domain-centric entities from at least one third external source in the Risk assessment engine; analyze the loss event frequency, the loss magnitude, and the at least one third input to quantify the risk associated with a target domain-centric entity; and generate a risk assessment report for the target domain-centric entity based on the analysis of the loss event frequency, the loss magnitude, and the at least one third input.

### BRIEF DESCRIPTION OF THE DRAWINGS

The accompanying drawings, which are incorporated herein, and constitute a part of this disclosure, illustrate exemplary embodiments of the disclosed methods and systems in which like reference numerals refer to the same parts throughout the different drawings. Components in the drawings are not necessarily to scale, emphasis instead being placed upon clearly illustrating the principles of the present disclosure. Some drawings may indicate the components using block diagrams and may not represent the internal circuitry of each component. It will be appreciated by those skilled in the art that disclosure of such drawings includes disclosure of electrical components, electronic components or circuitry commonly used to implement such components.
FIG. 1 illustrates a block diagram that illustrates an exemplary network environment for a domain-centric cyber risk quantification model, in accordance with an embodiment of the present disclosure.
FIG. 2 illustrates a block diagram representation of a domain-centric cyber risk quantification model, in accordance with an embodiment of the present disclosure.
FIG. 3 illustrates a block diagram of the present disclosure illustrating the use cases of a system forecasting the frequency and magnitude of cyber risk, in accordance with an embodiment of the present disclosure.
FIGs. 4A-4B illustrates a flow chart of the entire calculation process done for simulation for calculating the values which are fed to different leaf nodes in a FAIR model, in accordance with an embodiment of the present disclosure.
FIG. 5 illustrates a block diagram representation of exemplary scenarios by way of entity relationship, in accordance with an embodiment of the present disclosure.
FIG. 6 illustrates a block diagram representation of an exemplary tenant scenarios indicating entities used for customizing platform scenario, in accordance with an embodiment of the present disclosure.
FIG. 7 illustrates a summarized view of a risk quantification report, in accordance with an embodiment of the present disclosure.
FIG. 8 illustrates a process flow diagram for quantifying a domain-centric risk, in accordance with an embodiment of the present disclosure.

It may be evident to skilled artisans that the components contained in the diagrams are only for the purpose of illustrative, for simplicity and clarity, and have not necessarily been depicted to scale. The foregoing shall be more apparent from the following more detailed description of the disclosure.

### DETAILED DESCRIPTION

In the following description, for the purposes of explanation, various specific details are set forth in order to provide a thorough understanding of embodiments of the present disclosure. It will be apparent, however, that embodiments of the present disclosure may be practiced without these specific details. Several features described hereafter can each be used independently of one another or with any combination of other features. An individual feature may not address any of the problems discussed above or might address only some of the problems discussed above. Some of the problems discussed above might not be fully addressed by any of the features described herein.

Exemplary embodiments now will be described with reference to the accompanying drawings. The invention may, however, be embodied in many different forms and should not be construed as limited to the embodiments set forth herein; rather, these embodiments are provided so that this invention will be thorough and complete, and will fully convey its scope to those skilled in the art. The terminology used in the detailed description of the particular exemplary embodiments illustrated in the accompanying drawings is not intended to be limiting. In the drawings, like numbers refer to like elements.

The specification may refer to "an", "one" or "some" embodiment(s) in several locations. This does not necessarily imply that each such reference is to the same embodiment(s), or that the feature only applies to a single embodiment. Single features of different embodiments may also be combined to provide other embodiments.

As used herein, the singular forms "a", "an" and "the" are intended to include the plural forms as well, unless expressly stated otherwise. It will be further understood that the terms "includes", "comprises", "including" and/or "comprising" when used in this specification, specify the presence of stated features, integers, steps, operations, elements, and/or components, but do not preclude the presence or addition of one or more other features, integers, steps, operations, elements, components, and/or groups thereof. It will be understood that when an element is referred to as being "connected" or "coupled" to another element, it can be directly connected or coupled to the other element or intervening elements may be present. Furthermore, "connected" or "coupled" as used herein may include connected or coupled. As used herein, the term "and/or" includes any and all combinations and arrangements of one or more of the associated listed items.

Unless otherwise defined, all terms (including technical and scientific terms) used herein have the same meaning as commonly understood by one of ordinary skill in the art to which this invention pertains. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

In addition, all components described and depicted in the figures include the physical components required for the device assembly to function. Further, each component may comprise within itself one or more components, which are implicitly understood. These components may be operatively coupled to each other and may be configured to perform the function of the said device assembly. The components of the present disclosure may also be used in varying combinations (with or without using all of them) as per patient's requirement.

In the following description, for the purposes of explanation, numerous specific details have been set forth in order to provide a description of the invention. It will be apparent however, that the invention may be practiced without these specific details and features.

The present disclosure relates to a method and system for quantifying risk related to a specific domain (domain-centric risk). The invention involves multiple steps of data gathering and analysis conducted by a processor within a Risk Assessment Engine. The processor receives several inputs related to loss event frequency (such as the frequency of incidents that lead to a loss) from an external source, such as Intrusion Detection Systems (IDS), Security Information and Event Management (SIEM) tools, Managed Detection and Response (MDR) tools, or Extended Detection and Response (XDR) tools. The processor also receives a score related to a vulnerability (such as weakness) from another external source, which, in combination with the threat event frequency, aids in determining the frequency of loss events. The processor gathers data about the magnitude of loss (such as the extent or scale of loss) from a second external source. Another input is received from a third external source related to a number of domain-centric entities (such as specific aspects or elements within a given domain). Following this data collection, the processor then analyzes the loss event frequency, the loss magnitude, and the domain-centric entities to quantify the risk associated with a specific domain-centric entity. Next, a risk assessment report is generated for this entity based on the analysis.

The method further allows the generation of composite risk scores by combining the loss event frequency and the loss magnitude. It also involves notifying a user associated with the target domain-centric entity about the risk assessment report.

As used herein, the method for quantifying cyber risk based on the base model FAIR ontology referring to Cyber risk quantification to quantify cybersecurity-related risks and allow enterprises to manage them.

As discussed in the background section, in recent years, there has been a significant increase in cyber-attacks, resulting in substantial losses for enterprises. As a result, proactive cyber risk management has become crucial. Industrial stakeholders are now seeking financial support and measurable returns on security investments, while security expenses continue to consume larger portions of IT budgets.

To address these challenges, one or more entities such as businesses have started adopting risk quantification methods, with a focus on enhancing the existing ontology and framework of FAIR. The goal is to develop ways to programmatically feed the model with accurate inputs, allowing minimally trained personnel and part-time roles to consistently achieve quantified risk assessments.

The conventionally available model solely based on FAIR ontologies lacks the specificity required to establish connections between risk management and control management business functions. It fails to provide links between the frequency and magnitude of related loss events, the likelihood of events, their impact, and Business Key Performance Indicators (KPIs).

Cyber risk quantification is a method used to measure and quantify cybersecurity-related risks, enabling enterprises to effectively manage them. Various Cyber risk quantification methods exist, but this disclosure focuses on the FAIR model - Factor Analysis of Information Risk - with risk quantification inputs.

The present disclosure takes a domain-centric approach to quantify risks. It maps loss scenarios for a given target to specific business functions and processes, allowing for clear linkages within the model. The model incorporates selected inputs from products like IDR/MDR/XDR or SIEM and synthesizes threat intelligence from multiple sources and platforms.

Moreover, the present disclosure utilizes domain research entities to generate industry-specific loss data, which simplifies risk analysis by incorporating business context inputs based on business KPIs. The risk analysis is categorized into various types, including Digital, Physical, Privacy, Operational, Supply Chain, Financial, and Brand risks, as identified in the proposed model.

Considering the problems, drawbacks, and inherent shortcomings in the existing arts, there is a need for an improved and robust method for cyber risk quantification. The method in the present disclosure assesses non-technical reasons for susceptibility to cyber-attacks, such as business policies, credentials, and procedures that result in the losses incurred by enterprises.

The proposed model takes a proactive approach by quantifying inputs for the probability of action, and identifying risks in advance. The proposed model is developed for a Cyber Risk Quantification product based on this quantification model, which adheres to the Open FAIR standard.

As used herein, "User equipment", "user device" and/or "communication device", may be any electrical, electronic, electromechanical and computing device or equipment, having one or more transceiver units installed on it. The communication device is a battery-powered device. The communication device may include but is not limited to, a mobile phone, smartphone, laptop, a general-purpose computer, desktop, personal digital assistant, tablet computer, wearable device or any other computing device which is capable of implementing the features of the present disclosure and is obvious to a person skilled in the art.

As used herein, a "processor" includes one or more processors, wherein processor refers to any logic circuitry for processing instructions. A processor may be a general-purpose processor, a special-purpose processor, a conventional processor, a digital signal processor, a plurality of microprocessors, one or more microprocessors in association with a DSP core, a controller, a microcontroller, Application Specific Integrated Circuits, Field Programmable Gate Array circuits, any other type of integrated circuits, etc. The processor may perform signal coding, data processing, input/output processing, and/or any other functionality that enables the working of the system according to the present disclosure. More specifically, the processor or processing unit is a hardware processor.

As used herein, a "Display unit" or "display" includes one or more computing devices for displaying output to a user in accordance with the present disclosure. The display unit may be additional hardware coupled to the said electronic device or may be integrated within the electronic device. The display unit may further include but is not limited to CRT display, LED display, ELD display, PDP display, LCD display, OLED display, and the like.

As used herein, "Database" or "Memory" refers to a machine or computer-readable medium that includes any mechanism for storing information in a form readable by a computer or similar machine. For example, a computer-readable medium includes read-only memory ("ROM"), random access memory ("RAM"), magnetic disk storage media, optical storage media, flash memory devices or other types of machine-accessible storage media.

As used herein, "communication network" may include, but are not limited to, the Internet, a cloud network, a Wireless Fidelity (Wi-Fi) network, a Personal Area Network (PAN), a Local Area Network (LAN), or a Metropolitan Area Network (MAN). Various devices in the network environment may be configured to connect to the communication network in accordance with various wired and wireless communication protocols. Examples of such wired and wireless communication protocols may include, but are not limited to, at least one of a Transmission Control Protocol and Internet Protocol (TCP/IP), User Datagram Protocol (UDP), Hypertext Transfer Protocol (HTTP), File Transfer Protocol (FTP), Zig Bee, EDGE, IEEE 802.11, light fidelity (Li-Fi), 802.16, IEEE 802.11s, IEEE 802.11g, multi-hop communication, wireless access point (AP), device to device communication, cellular communication protocols, and Bluetooth (BT) communication protocols.

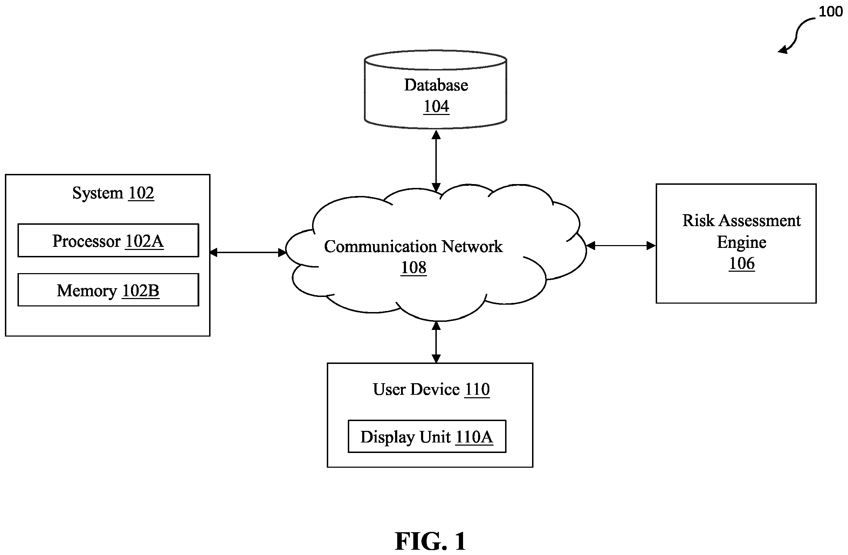

The present disclosure is further explained in detail below with reference to the diagrams. FIG. 1 illustrates a block diagram that illustrates an exemplary network environment 100 for a domain-centric cyber risk quantification model, in accordance with an embodiment of the present disclosure. In an exemplary embodiment, as shown in Fig. 1, there is a network environment 100 that includes at least one system 102, at least one database 104, at least one risk assessment engine 106, at least one communication network 108, and at least one user device 110, wherein all the components are assumed to be connected to each other unless otherwise indicated below. In an embodiment, the system 102 may include a processor 102A and a memory 102B. In an embodiment, the user device 110 may include a display unit 110A. Also, in FIG. 1 only one system 102, one processor 102A, one memory 102B, one database 104, one risk assessment engine 106, one communication network 108, one user device 110, and one display unit 110A are shown, however, the network environment 100 may comprise multiple such units and modules or the network environment 100 may comprise any such numbers of said units and modules, as may be required to implement the features of the present disclosure. Also, there may be one or more sub-units of said units and modules of the network environment 100 and the same is not shown in the FIG. 1 for clarity.

The system 102 may be configured for quantifying a domain-centric risk. The system 102 may include the processor 102A, and the memory 102B. The memory 102B may be coupled to the processor 102A, the memory 102A may store instructions. The instructions when executed by the processor 102A may facilitate in quantifying a domain-centric risk. In an embodiment, the processor 102A may be configured to receive various forms of input data, which are integral to the risk quantification process. The processor 102A may be configured to receive at least one first input associated with a loss event frequency. This data represents how often a specific loss event, such as a cyber security breach or a system failure, occurs within a given time frame.

The at least one first input is received from at least one first source. The at least one first source may be external to the system 102 and the risk assessment engine 106. The at least one first external source could be a variety of systems or databases that track and record loss events. Examples of the at least one first external source may include an Intrusion Detection System (IDS), a Security Information and Event Management (SIEM) tool, a Managed Detection and Response (MDR) tool, or an Extended Detection and Response (XDR) tool. In an embodiment, the at least one first external source can provide real-time or near real-time data about loss events, making the risk assessment more accurate and up-to-date.

The processor 102A may further be configured to receive a score that's associated with a particular vulnerability from a second external source. A vulnerability score quantifies the severity and potential impact of specific security weaknesses that exist in a system. This score may be influenced by a variety of factors, such as the complexity required to exploit the vulnerability, the potential impact of the exploit, and whether the vulnerability is well-known or not. The second external source may include a vulnerability database or a threat intelligence feed. These sources regularly compile and update vulnerability data from a variety of inputs, including software vendors, independent researchers, and automated scanning tools.

In an embodiment, both the threat event frequency and the vulnerability score may be used together to make a more nuanced determination of loss event frequency. For example, a high-frequency loss event with a low vulnerability score might be less concerning than a low-frequency loss event with a high vulnerability score. By considering both factors, the system 102 may provide a more accurate and comprehensive assessment of the domain-centric risk. Further, the vulnerability score might include several sub-scores. For instance, a threat score to identify the capability associated with the vulnerability and a susceptibility score and control score to determine the resistance strength and difficulty associated with the vulnerability. These sub-scores provide a detailed view of the vulnerability, helping to more accurately assess the potential risk.

The processor 102A may be configured to receive at least one second input associated with a loss magnitude from at least one second external source. The processor 102A may be based within the Risk Assessment Engine 106, which is a computational environment specifically designed to handle, process, and analyze vast amounts of complex and diverse data pertaining to cyber risk. Loss Magnitude may correspond to a potential scale or size of the loss that might occur if a threat materializes into an actual cyber-attack or breach. This could include, for example, financial losses, data losses, or losses in terms of reputation or business continuity.

The processor 102A may be configured to receive the Loss Magnitude inputs from the at least one second external source. The at least one second external source could include various risk research entities, risk-indicating models, databases, or domain-specific research entities. The information might be received in the form of raw data, reports, risk indicators, or model outputs. Once the processor 102A has received the Loss Magnitude inputs, the processor 102A may further incorporate the received at least one second input into a comprehensive risk assessment process. The at least one second input may directly impact the final risk score or assessment, affecting decisions about resource allocation, risk mitigation strategies, and overall cyber risk management.

In an example, the domain-centric entity may be a large financial institution. This institution is constantly exposed to cyber threats, ranging from phishing attacks to potential data breaches. In this scenario, an external source could be a financial industry-specific cybersecurity research firm. This firm regularly publishes reports indicating potential vulnerabilities in the sector's digital infrastructure and estimates the magnitude of losses that could result from successful cyber-attacks. For instance, the firm might publish a report stating that due to a newly discovered vulnerability in a common banking software, a successful cyber-attack could potentially lead to a data breach affecting up to 50% of a bank's customers. This could lead to an estimated financial loss of, say, $20 million, factoring in regulatory fines, the cost of remediation, customer compensation, and reputation loss. This report would then be picked up by the Risk Assessment Engine 106. The processor 102A receives this second input associated with the Loss Magnitude, recognizing that a potential vulnerability could lead to a significant loss. The processor 102A would then incorporate this information into its risk analysis. It would factor in this potential $20 million loss when calculating the risk score for the financial institution. If the institution were currently using the vulnerable banking software, the Risk assessment engine 106 might elevate the risk score, indicating a higher potential risk. In response to this high-risk score, the financial institution might take steps to mitigate this risk, such as patching the software vulnerability, implementing additional security measures, or even switching to a different software system.

The processor 102A may be configured to receive at least one third input. The at least one third input may be associated with the plurality of domain-centric entities. The at least one third input may be received from the third external source into the Risk Assessment Engine 106. The domain-centric entity can refer to a specific area or aspect within a network or system that can be assessed for risk. This might include individual servers, databases, networks, or even specific software applications. Each of these entities can have unique characteristics and vulnerabilities which influence the overall risk profile of the system.

The third external source may include a domain research entity, which might provide information about various aspects of a company's IT infrastructure. This might include data on the software versions they're running, the age of their servers, or the complexity of their network architecture. These details, specific to each domain-centric entity, provide the necessary context for understanding how vulnerabilities and loss events might impact each one. The processor 102A collects this domain-centric information and may facilitate in assessing the cyber risk associated with each specific domain-centric entity within the larger network or system.

In an example, the system 102 is part of a cyber risk assessment system for a large retail corporation. This retail corporation, like many businesses, faces a variety of cybersecurity threats such as data breaches, malware attacks, and phishing scams. The Loss Magnitude is a quantification of the potential impact of a loss event on the corporation. This is typically calculated by considering factors like financial loss, reputational damage, operational disruption, and regulatory penalties. The second external source could be a variety of systems or databases that provide data related to these factors. For instance, financial loss could be estimated using historical data on the costs of previous cyber-attacks, which might be found in financial databases or insurance claim records. Similarly, operational disruption could be estimated using data from incident response records or business continuity planning systems, which could provide insights into how previous cyber-attacks have impacted the corporation's operations. So, in our example, the processor 102A might receive an input from a financial database indicating that the average cost of a data breach in the retail sector is $3.86 million. Simultaneously, it might receive an input from an incident response system indicating that a typical data breach causes two days of operational disruption. The processor 102A, configured as part of the Risk Assessment Engine 106, would then incorporate these inputs into its calculation of the Loss Magnitude. This could involve, for example, calculating the direct financial cost of a potential data breach (based on the $3.86 million figure), as well as the indirect costs of operational disruption (for example, by estimating the loss of revenue resulting from two days of halted operations). The calculated Loss Magnitude would then be used, alongside other factors, to quantify the overall risk associated with cyber threats to the retail corporation.

Once the processor 102A has received the various inputs - the loss event frequency, the vulnerability scores, the loss magnitude, and the data pertaining to the domain-centric entities - it proceeds to analyze these elements to quantify the risk associated with a specific target domain-centric entity. This quantification process involves evaluating how often loss events (such as security breaches or system failures) occur, the scale of potential losses (the loss magnitude), the susceptibility and resilience of the system based on the vulnerability scores, and the specific characteristics of the domain-centric entity itself. By combining and analyzing these different variables, the processor 102A can arrive at a comprehensive understanding of the risk profile for each domain-centric entity.

In an embodiment, the database 104 may be connected with a pre-trained machine learning (ML) model. The ML model may be trained using historical data related to previous risk events, their frequency, and their associated losses. By analyzing these patterns from the past, the model has learned to predict the risk associated with similar events in the future. The Processor may be configured to carry out a risk analysis. The trained ML model may be applied on the received at least one first input, the received at least one second input, the received at least one third input, and the received at least one score.

Once the Processor 102A has received these inputs, it applies the trained model to analyze the loss event frequency, loss magnitude, and the domain-centric entity data to estimate the risk associated with the domain-centric entity. The output of this process is a quantified risk assessment for the domain-centric entity.

For example, if the system is assessing the risk of cyber-attacks on a company's network, the Processor 102A would take as inputs the historical frequency of attacks on similar networks (Loss Event Frequency), the average cost or impact of these attacks (Loss Magnitude), and data related to the company's specific network (Domain-centric Entity Data). It would then use the trained model to analyze these inputs and generate a risk assessment for the company's network.

Based on this analysis, the processor 102A may then generate a risk assessment report for the target domain-centric entity. This report includes a quantified risk score, and it may also outline the main vulnerabilities and threats, provide context on the loss event frequency and loss magnitude, and give a detailed profile of the entity's unique characteristics. The report facilitates in managing and mitigating risks in the system. For example, the risk report for an outdated server might identify a high risk score due to frequent loss events, large potential losses, high vulnerability scores, and specific issues related to the server's age and software. This report would then be used to inform decisions about system upgrades, security investments, or other risk mitigation strategies.

The processor 102A is further configured to receive the threat score, the susceptibility score, and the control score from an external vulnerability database. This database can be a comprehensive source of information that quantifies and categorizes different cybersecurity threats based on various factors.
- Threat Score: This represents the potential danger posed by a specific cybersecurity threat. The higher the threat score, the more damaging the cybersecurity threat could be.
- Susceptibility Score: This score quantifies how susceptible a system or network is to a particular cybersecurity threat. A high susceptibility score means that the system or network is highly vulnerable to the specified threat.
- Control Score: This score measures the effectiveness of the controls that are in place to prevent or mitigate the cybersecurity threat. A high control score indicates that the existing controls are highly effective in combating the threat.

These scores are used to provide a comprehensive view of the potential cyber risk for an organization. The processor 102A uses these scores to calculate various metrics such as the threat event frequency, vulnerability, loss event frequency, and loss magnitude. This information can be used to generate a detailed cyber risk report, providing critical insights that help in strategic decision-making related to cybersecurity.

The processor 102A may be configured to receive at least one second input associated with the loss magnitude, which includes domain-centric loss data. Domain-centric loss data pertains to information about potential losses that are specifically associated with the target domain of interest. This data could be related to the financial loss, reputational damage, operational disruption, or any other kind of loss that could occur within the specific business or operational domain of the organization.

The relevance of using domain-centric loss data lies in its ability to provide a more accurate and contextual understanding of the potential impact of a cybersecurity threat. It is tailored to the unique characteristics and vulnerabilities of the specific domain, hence making the risk assessment more precise and meaningful. The processor 102A integrates this domain-centric loss data along with other inputs like threat scores, susceptibility scores, control scores, and so on. This comprehensive approach aids in generating a detailed and domain-specific cyber risk assessment report, aiding the organization in formulating effective cyber risk mitigation strategies.

The processor 102A is further configured to receive inputs from at least one second external source. These sources include one or more risk research entities and one or more risk indicating models.

Risk research entities refer to organizations or groups that perform extensive research and analysis on various types of risks, including cyber risks. They may publish studies, reports, and statistics that can provide valuable insights about the threat landscape, vulnerabilities, and potential impact of cyber threats. Risk indicating models, on the other hand, are statistical or computational models designed to predict or indicate the level of risk based on various factors. These models can use a wide array of inputs, such as past incidents, threat intelligence, vulnerability assessments, and other relevant data to generate risk scores or probabilities. The processor 102A leverages data from these sources to enhance the depth and accuracy of its cyber risk assessments. By incorporating insights from risk research entities and predictions from risk indicating models, it can provide a more comprehensive understanding of the cyber risks associated with the specific domain of interest. This, in turn, can guide more effective decision-making and risk management strategies.

The processor 102A is further configured to receive inputs from at least one third external source, which includes one or more domain research entities. Domain research entities refer to organizations, institutes, or groups that specialize in gathering and analyzing data specific to a certain field or sector (the "domain"). These entities delve deeply into understanding the nuances and intricacies of their particular focus area. For example, in the realm of cybersecurity, a domain research entity might concentrate on healthcare cybersecurity, financial sector cybersecurity, or perhaps the cybersecurity of industrial control systems. Each of these domains has unique characteristics, vulnerabilities, threat actors, and potential impacts, which specialized domain research entities strive to understand and quantify.

In an embodiment, data from the domain research entities is utilized to contribute domain-specific knowledge to the risk assessment process. This inclusion allows the risk assessment to be more relevant, accurate, and detailed for the specific domain in question, which can lead to more effective and targeted risk management strategies.

The processor 102A may be to include a notification mechanism. After the processor 102A generates the risk assessment report, it sends a notification to at least one user associated with the target domain-centric entity. i.e., when the risk assessment process is complete, the processor 102A automatically sends the resulting report to one or more individuals who are associated with the entity that was the focus of the assessment. This could be anyone from a system administrator, a security officer, or a manager to an executive, depending on the organization's structure and who is designated to handle such reports. The aim of this notification feature is to ensure that the risk assessment report reaches the relevant parties promptly, thereby enabling them to take timely action based on the findings of the report. This feature is crucial in ensuring effective risk management, as the value of a risk assessment lies in its ability to inform and guide appropriate action. By notifying the relevant parties as soon as the report is available, the system helps ensure that this value is realized.

The Processor 102A is further configured to control the display unit 110A of the user device 110 to present the risk assessment report. i.e. the processor 102A, once has generated the risk assessment report based on the various inputs and calculations it has performed, has the capability to command the display unit 110A of the user's device 110 (which could be a computer monitor, laptop screen, tablet display, etc.) to visually present the risk assessment report. The rendering of the report involves converting the data from the risk assessment into a format that can be easily read and understood by the user. This could involve various forms of data visualization such as charts, graphs, tables, or even interactive elements. By rendering the report on the user's device, the system ensures that the valuable insights from the risk assessment are readily accessible to the user. The user can then use this information to make informed decisions about how to manage and mitigate the identified cyber risks. This approach provides a high level of convenience and immediacy, as the user does not have to go through any extra steps to access the report. It is presented right on their device, ready for them to review and act upon.

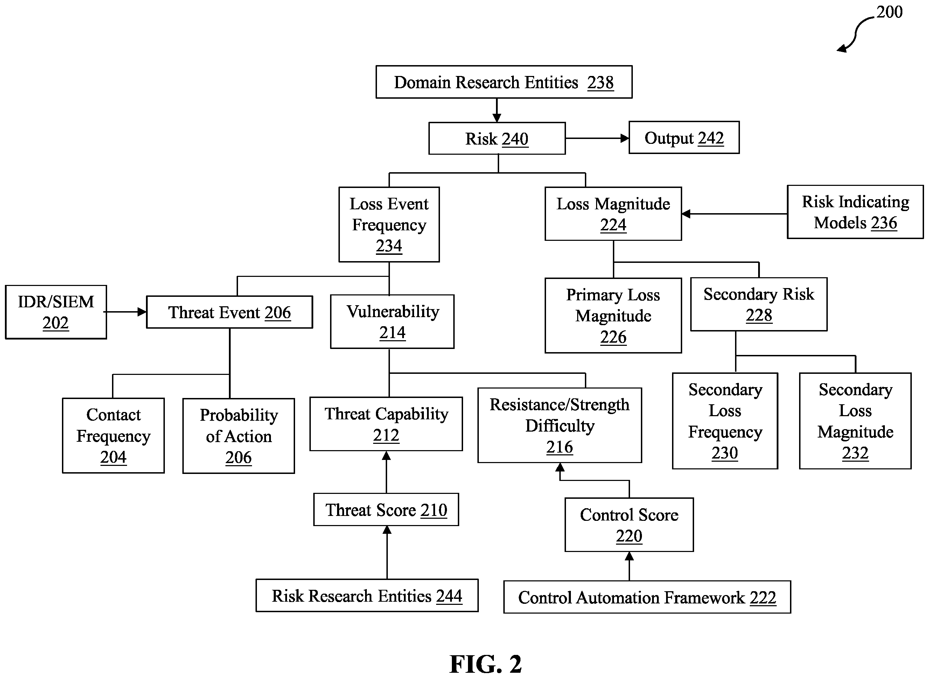

FIG.2 illustrates a block diagram representation of a domain-centric cyber risk quantification model, in accordance with an embodiment of the present disclosure.

In the risk quantification model 200, the threat event frequency 208 is determined by two inputs: the contact frequency 204 and the probability of action 206. The contact frequency 204 refers to how often a potential threat or malicious actor comes into contact with the system or network. This could be measured in terms of attempted breaches, suspicious activities, or other forms of contact that could potentially lead to a security incident. The probability of action 206 refers to the likelihood that, given contact, a threat or malicious actor will attempt to exploit a vulnerability or cause a security incident. This is typically gauged based on patterns of past behavior, the nature of the threat, and other relevant factors.

In the proposed model, the contact frequency 204 and the probability of action 206 are not simply estimated based on industry benchmarks or generalized data. Instead, the model uses real, enterprise-specific data obtained from security systems like Intrusion Detection Systems (IDS) or Security Information and Event Management (SIEM) tools 202. These systems monitor network and system activity and can provide detailed and up-to-date information on potential threats and vulnerabilities. By integrating data from these systems, the proposed model can provide a more accurate, context-specific assessment of the threat event frequency 208.

Threat Capability (TCap) 212 is used to assess the potential level of force that a threat agent can deploy against an asset in a given context. TCap 212 is fundamentally a measure of a threat agent's resources and skill level, and it evaluates how effectively these can be applied to compromise an asset. Unlike contact frequency 204 and probability of action 208, TCap 212 is external to the enterprise. It hinges on the capabilities of threat actors or agents who might target the enterprise, rather than on the characteristics of the enterprise itself. As such, TCap 212 isn't readily measured using in-house data or systems, but instead must be inferred from information about threat actors' activities and capabilities.

In the proposed model, this information is sourced from various forms of threat intelligence. Risk research entities draw on a multitude of sources to provide this data, including both commercial products and open-source threat feeds. The data culled from these sources is processed to generate a threat score 210. This score, a quantified representation of threat agents' potential to harm an asset, serves as the primary input for TCap 212 in the risk quantification model. By synthesizing broad-spectrum threat intelligence into a single score, the model can efficiently account for the varying capabilities of potential threat actors in its risk assessments.

Resistance Strength or Difficulty 216 is another integral factor in the risk quantification model. It signifies the probability that a threat event will progress into a loss event, essentially representing the system's vulnerability 214. This vulnerability 214 is a function of two elements: Threat Capability 212 and Resistance Strength/Difficulty 216. In the proposed model, Resistance Strength/Difficulty 216 is an extensive measure that relies on two more input parameters: Susceptibility Score 218 and Control Score 220. The Susceptibility Score 218 and Control Score 220 provide a more granular look at the system's vulnerability and resistance to potential threats. In determining the Loss Event Frequency 234, the model combines the Threat Event Frequency 208 and Vulnerability 214. This combination reflects the fact that a loss event can only occur if there is both a threat (represented by the Threat Event Frequency 208) and a potential point of exploit (represented by Vulnerability 214). Therefore, the Loss Event Frequency 234 provides a quantitative measure of the expected number of loss events over a specified time period, given the current threat landscape and the vulnerabilities present in the system or asset.

The Susceptibility Score 218 is calculated by evaluating all vulnerabilities present in the target system for which the risk quantification is being conducted. These vulnerabilities are each assigned a CVSS (Common Vulnerability Scoring System) score, and these scores are used to determine the overall Susceptibility Score 218. The Control Score 220, on the other hand, is a quantified metric that indicates the robustness of the control mechanisms in place around the target system. These controls can include standard security measures like MFA (Multi-Factor Authentication), data encryption for sensitive data, both at rest and in transit, PAM (Privileged Access Management), and others. Together, these metrics contribute to the determination of Resistance Strength/Difficulty 216. To produce these values, the Control Automation Framework 222 is utilized. This framework analyzes and processes various cyber risk indicators within the enterprise, translating them into quantifiable scores (Control Score 220) that can be incorporated into the risk quantification model. This comprehensive approach allows the model to provide a nuanced view of the system's vulnerability and the difficulty a threat agent might encounter when attempting to breach the system.

Loss Magnitude 224 for a specific loss scenario may be computed as a function of two factors: Primary Loss Magnitude 226 and Secondary Risk 228. Each of the Primary Loss Magnitude 226 and Secondary Risk 228 represents different aspects of potential loss in a cyber risk scenario. Primary Loss Magnitude 226 refers to the immediate losses that would be incurred in the event of a successful threat. This includes, but is not limited to, immediate financial losses, disruption of service, and costs related to remediation and recovery. On the other hand, Secondary Risk 228 accounts for the indirect and often long-term effects of a successful threat. The calculation of Secondary Risk 228 is dependent on the Secondary Loss Event Frequency 230 and Secondary Loss Magnitude 232. Secondary Loss Event Frequency 230 represents the probability of secondary loss events occurring as a result of the initial loss event. For instance, a primary loss event could be a data breach, and secondary loss events could include the loss of customer trust, damage to brand reputation, and potential legal implications.

The Loss Magnitude 224 is an integral part of the risk quantification model, and it represents an estimation of the potential impact or the severity of a loss event, such as a cyber-attack or security breach, within a specific loss scenario. The computation of the Loss Magnitude 224 incorporates several factors, namely the Primary Loss Magnitude 226, Secondary Risk 228, and data from one or more Risk Indicating Models 236. The Primary Loss Magnitude 226 represents the direct costs associated with a loss event. These costs are typically immediate and can be quantified more easily. For example, they might include costs related to incident response, system repair and recovery, potential regulatory fines, or immediate business disruption. The Secondary Risk 228 represents potential follow-on or indirect impacts from a loss event. These are usually more difficult to quantify as they might materialize over a longer period of time after the event. For example, these might include costs related to longer-term business interruption, reputational damage, loss of customer trust, or impacts on share price. Finally, Risk Indicating Models 236 can provide additional insights into potential risks associated with a loss event. These models might use a variety of data sources and analytical techniques to forecast the potential impacts of a loss event. This could include scenario analysis, benchmarking against similar entities or past events, or even more complex predictive models using machine learning or AI. Combining these elements provides a comprehensive view of the potential Loss Magnitude 224, which then feeds into the overall risk quantification model to estimate the cyber risk associated with the target domain-centric entity.

Secondary Loss Magnitude 232 measures the potential magnitude of these secondary loss events. It takes into account a variety of factors such as the cost of litigation, the estimated loss of revenue due to decreased customer trust, and costs associated with repairing brand image. Loss Magnitude 224 is thus a comprehensive metric that not only considers immediate losses due to a threat but also the potential cascading effects that could lead to significant long-term losses. These factors can be specific to the industry domain, and so the inputs for their computation are often derived from domain research entities. This ensures that the risk assessment is tailored to the specific characteristics and vulnerabilities of the industry domain in question.

The Risk Assessment Report 240 is an output generated by the system after a comprehensive analysis of various inputs and calculations, specifically the Loss Event Frequency 234, Loss Magnitude 224, and inputs from Domain Research Entities 238. The Loss Event Frequency 234, as discussed previously, is a measure of how often a loss event, or security breach, is expected to occur. The Loss Magnitude 224 provides an estimate of the potential consequences or the degree of harm that could be caused by a loss event. It reflects the potential severity of a security incident, including the potential financial, operational, and reputational damage. Inputs from Domain Research Entities 238 add an additional layer of specificity and expertise to the assessment process. These inputs can include sector-specific risks, regulatory considerations, market dynamics, and other relevant contextual factors that might influence the risk profile of the target domain-centric entity. The Risk Assessment Report 240, therefore, synthesizes this data to provide a holistic overview of the cyber risk associated with the target domain-centric entity. The report represents the risk in terms of probability (the likelihood that a loss event will occur) and impact (the potential consequences of such an event). That will be displayed at output 242.

This quantified risk assessment enables businesses to prioritize their risk mitigation efforts, focusing resources on the most significant threats and vulnerabilities. Furthermore, the Risk Assessment Report 240 also offers linkages to the business, meaning it provides information that is directly relevant and applicable to the business context. This aids in decision-making processes, providing strategic insight into how cyber risk could impact the business, and how such risks can be effectively managed and mitigated.

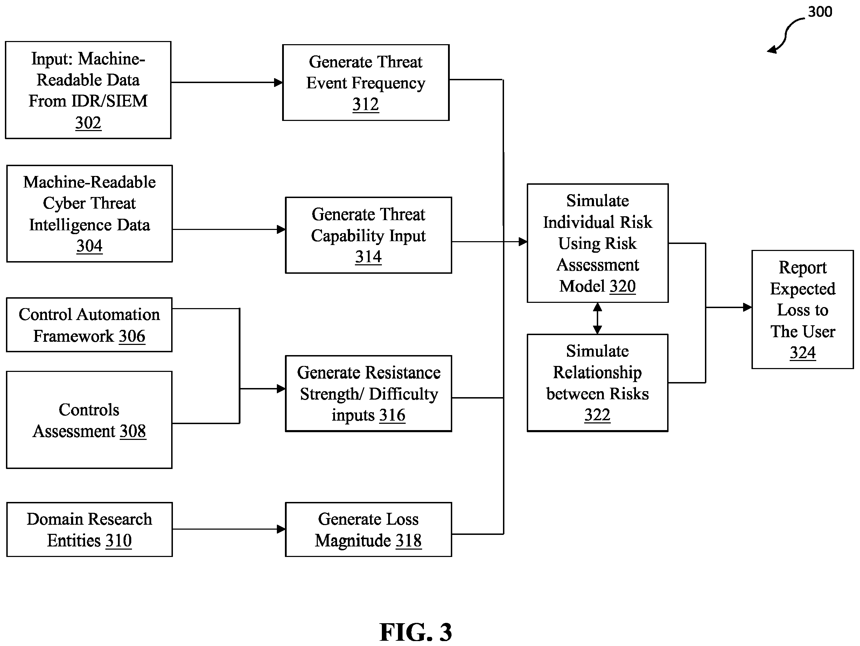

FIG.3 illustrates a block diagram of a present disclosure illustrating the use cases of a system forecasting the frequency and magnitude of cyber risk, in accordance with an embodiment of the present disclosure. FIG. 3 presents a block diagram 300 of the system's use cases and operational workflow in forecasting the frequency and magnitude of cyber risks. The process starts with several inputs that are utilized to generate components of the risk assessment model:
- Machine-readable data from Intrusion Detection and Response (IDR) or Security Information and Event Management (SIEM) systems 302: This data is processed to generate the threat event frequency 312. These inputs represent the frequency of potential threat contacts and the likelihood of these threats leading to actual adverse actions, respectively.
- Machine-readable Cyber Threat Intelligence data 304: This data is utilized to generate the Threat Capability Input 314. It offers insights into the capabilities of potential threat actors, such as their resources, skills, and the level of force they can apply against an asset.
- Control Automation Framework 306 and Controls Assessment 308: These two components contribute to generating the Resistance Strength/Difficulty Input 316. This input measures the organization's ability to resist or mitigate threats based on its current vulnerability and control environment.
- Domain Research Entities 310: This provides necessary data to generate the Loss Magnitude 318, quantifying the potential impact of a loss event, considering both immediate/primary and long-term/secondary impacts.

The Risk Assessment Model 320 utilizes four primary inputs, which have been previously generated from a variety of sources as per your Figure 3:
- Threat Event Frequency 312: This input measures the expected rate of occurrence of a threat event within a specified period. Essentially, it calculates how often we can anticipate a threat event to occur based on historical data and predictive analytics.
- Threat Capability Inputs 314: This input gauges the potential of a particular threat to harm the system or infrastructure. It evaluates the power, capacity, and competence of the threat based on gathered intelligence and known patterns of behavior.
- Resistance Strength/Difficulty Inputs 316: This input quantifies the resilience of an organization's systems and infrastructure against potential threats and attacks. It represents the robustness of defensive measures and the level of difficulty a threat would face when attempting to exploit the system.
- Loss Magnitude 318: This input assesses the estimated impact or damage that could result from a successful cyber-attack. It calculates potential financial, operational, or reputational losses, considering various factors such as data recovery costs, downtime, and business interruption.
In the Risk Assessment Model 320, these inputs are used to calculate and simulate the individual risk associated with each potential cyber-attack. The model examines the frequency of the threat event, the capability of the threat, the resistance strength of the system, and the magnitude of potential loss to provide a comprehensive risk score for each threat.

The score can provide insights into the possible impact of a cyber-attack, helping organizations prioritize their defense strategy and allocate resources effectively. By utilizing these inputs, the Risk Assessment Model 320 enables a thorough, predictive, and nuanced understanding of the cybersecurity risks that an organization might face.

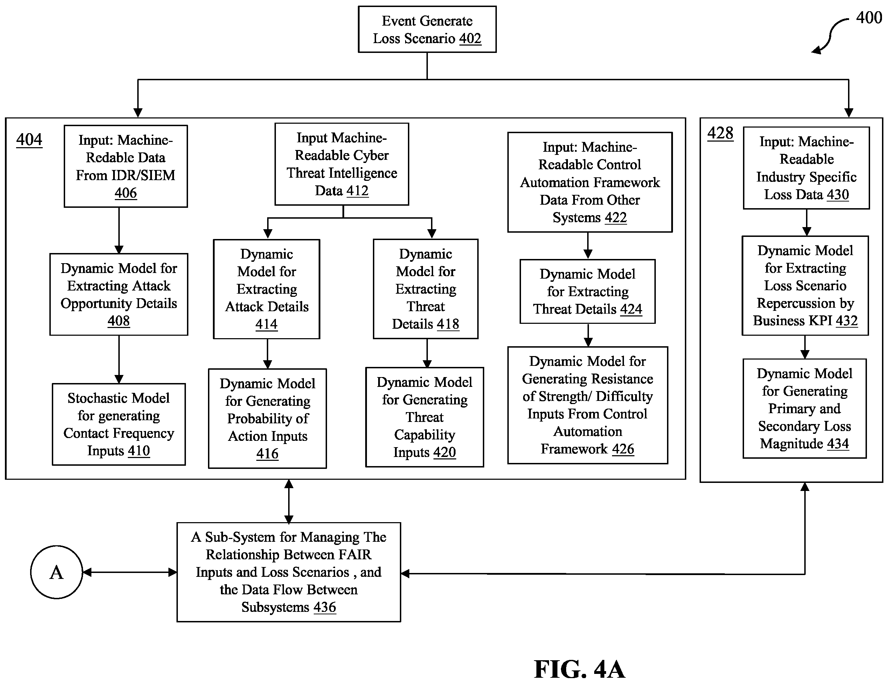

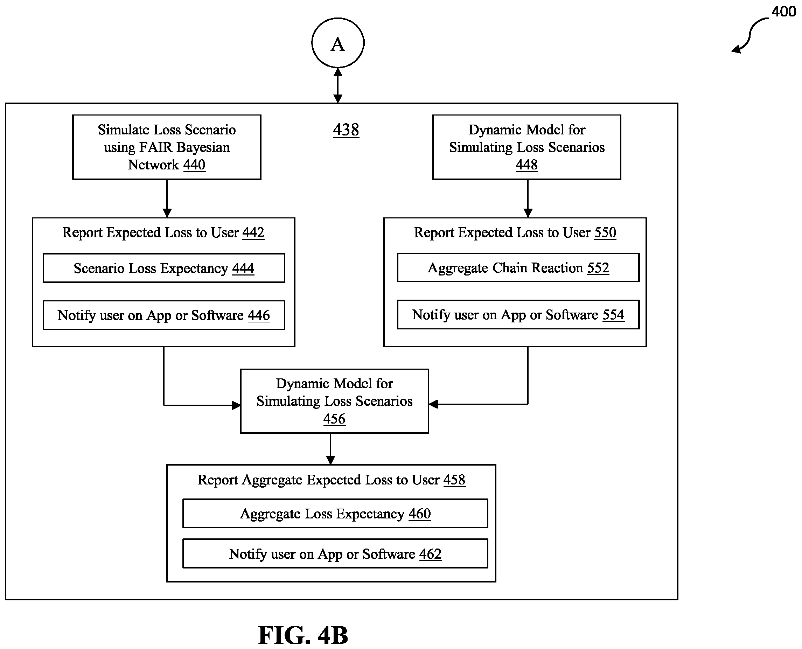

FIGs. 4A-4B illustrate a flow chart of entire calculation process done for simulation for calculating the values which are fed to different leaf nodes in a FAIR model, in accordance with an embodiment of the present disclosure. As illustrated, in FIGs. 4A-4B, each sub-system of the flow chart 400 represents one or more use-cases necessary for this forecast, including:
- Contact Frequency Inputs
- Probability of Action Inputs
- Threat Capability Inputs
- Resistance Strength / Difficulty Inputs
- Generate Primary and Secondary Loss Magnitude Inputs
- Manage the relationships between FAIR (Factor Analysis of Information Risk) Inputs and Loss Scenarios
- Analyze and report individual or aggregated cyber risk

Each phrase such as "one or more loss scenarios," "cyber risk," and others represents a feature, structure, characteristic, or relationship described in connection with the indicated loss scenarios, involved in at least one step or sub-system of the system. The process starts with the generation of one or more loss scenarios 402, for instance, a series of ransomware attacks against one or more computing systems. These scenarios can be sourced from various means such as database servers, digital asset monitoring, or APIs. These loss scenarios are then made available to sub-systems that quantify the frequency 404 and magnitude 428 of the scenarios, manage the relationships between FAIR inputs and loss scenarios 436, and analyze the cyber risk 438.

The system includes two sub-systems 404, 428 for the first and second use-cases:
**Use-Case 1:** Estimating Contact Frequency Inputs 410: Machine learning models process machine-readable IDR/MDR/XDR/SIEM data 406, and dynamic models extract details about attack opportunities 408, including factors like threat source, target, and methods. Stochastic models then generate Contact Frequency Inputs 410 as machine-readable data.
**Use-Case 2:** Estimating Probability of Action Inputs 416: Machine learning models interpret machine-readable Threat Intelligence Data 412 and details about attack opportunities 408, from which dynamic models extract attack details 414 like methods and techniques. Stochastic models generate Probability of Action Inputs 416 as machine-readable data.
**Use-Case 3:** Threat Capability Inputs 420: Machine learning models process machine-readable threat intelligence data 412, and dynamic models extract details about threats 418, including motivations, attack modes, and sophistication. These details are processed by stochastic models to generate Threat Capability Inputs 420.
**Use-Case 4:** Resistance Strength / Difficulty Inputs 426: Machine learning models interpret machine-readable Control Automation Framework data 422, and dynamic models extract control details 424, like absence/presence, relationships, and importance. These are used to generate Resistance Strength / Difficulty Inputs using deterministic and stochastic models.
**Use-Case 5:** Primary and Secondary Loss Magnitude Inputs 434 Machine learning models process machine-readable industry-specific loss data 430, and dynamic models extract and categorize repercussions by business KPI 432. These repercussions, such as outage windows and reputation damage, are used by stochastic models to generate Primary and Secondary Loss Magnitude Inputs 434.
**Use-Case 6:** Managing the relationships between FAIR Inputs and Loss Scenarios (136) A data management plane ensures the integrity of relationships between sub-systems and related data.
**Use-Case 7:** Analyzing and reporting individual or aggregated cyber risk 438 Machine learning models process FAIR Inputs before the data flows through dynamic models. The extended FAIR Bayesian Network 440 simulates one or more loss scenarios. Users can select the scenario reporting modes 442, after which the system reports scenario loss expectancy 444 and may generate a notification for the user 446. If users define chain reactions of loss scenarios, the system simulates these reactions 448, reporting the aggregated expected loss 452 and potentially generating a user notification 454. Users can select scenarios or chain reactions for analysis 456 and choose aggregate reporting modes 458. The system then reports aggregate loss expectancy 460 and may generate a notification for the user 462.
In summary, the system employs a series of interconnected sub-systems and use-cases to effectively forecast the frequency and magnitude of cyber risk based on various data inputs and modeling techniques.

After the simulation, values are distributed to the different leaf nodes of the FAIR (Factor Analysis of Information Risk) model, and values for each leaf node are calculated for each simulated year. The machine learning model outputs for "Contact Frequency Inputs [110]", "Probability of Action [116]", "Threat Capability [120]", "Resistance Strength / Difficulty Inputs [126]", and "Primary and Secondary Loss Magnitude Inputs [134]" are further processed in the machine learning model to estimate the values of the succeeding nodes. To estimate Threat Event Frequency: • The model accesses the machine-readable data for contact frequency and probability of action for each simulated year and feeds it to the compute layer. • The threat event frequency for each simulated year is then calculated as the product of contact frequency and the probability of action. To estimate the Vulnerability Value: • The model accesses the machine-readable data for threat capability and resistance strength for each simulated year and feeds it to the compute layer. • Threat vulnerability for each simulated year is then calculated as:
- Vulnerability = 0, if Threat Capability ≤ Resistance Strength
- Vulnerability = 1, if Threat Capability > Resistance Strength
To estimate the Loss Event Frequency Value:
- The model accesses the machine-readable data for vulnerability and threat event frequency for each simulated year and feeds it to the compute layer.
- The loss event frequency for each simulated year is calculated as the product of vulnerability and threat event frequency.
Estimating the Primary Loss Magnitude Value:
- The model accesses the machine-readable data for each form of primary losses for each simulated year and feeds it to the compute layer.
- The total primary loss value for each simulated year is then calculated as the sum of the loss values for each form of loss.
Estimating the Secondary Loss Magnitude Value:
- The model accesses the machine-readable data for each form of secondary loss and its corresponding secondary loss event frequency for each simulated year and feeds it to the compute layer.
- The total secondary loss value for each simulated year is then calculated as the sum of the product of the secondary loss event frequency and secondary loss magnitude for each form of loss.
Estimating Total Loss Magnitude Value:
- The total loss magnitude value can be calculated as the sum of the total primary loss and total secondary loss values.
The outputs produced by the model follow the hierarchy below:
- Outputs produced at the individual scenario level.
- Aggregated output from multiple scenarios.

At the individual scenario level, the report details the value of cyber risk. It includes Single Loss Expectancy (SLE), which can be broken down into minimum, median, and maximum SLE values, each of which is subdivided into direct and indirect loss values. Single loss expectancy can be calculated by dividing the loss event frequency by the total loss magnitude for each simulated year. The minimum, median, and maximum values of single loss expectancy can be found from the n simulated years.

The report also includes Annualized Loss Expectancy (ALE), detailing the minimum, average, and maximum ALE, as well as the probability of loss ranging from minimum to average ALE, and from average to maximum ALE.
Annualized loss expectancy is the total risk value for each simulated year. The minimum, median, and maximum values of annualized loss expectancy can be found from the n simulated years. The probabilities are calculated by dividing the number of simulated years where the ALE falls in the given range by the total number of simulations. Aggregate and summary output from multiple scenarios give an overall aggregated risk at the enterprise level, covering multiple risk scenarios. This report produces Aggregated Annualized Loss Expectancy and other KPI data like Top single loss events, Top total risk scenarios, etc. The sum of all individual scenarios for a particular simulated year produces aggregated annualized loss expectancy. The minimum, median, and maximum values of aggregated annualized loss expectancy can be found from the n simulated years.

Moreover, the Aggregated Annualized Loss Expectancy (AALE) plays a vital role in decision making at the enterprise level. It allows stakeholders to understand the overall potential financial impact of cyber risk on the business.

The system also provides an interface for users to interact with the model. Users can select the scenarios or chain reactions they prefer to analyze. For example, an organization with multiple computing systems composed of computing elements supporting supply chains in multiple business units might wish to investigate a ransomware attack's potential to cause a chain reaction of supply chain outages.
Users can also select their preferred reporting modes. The system provides flexibility in how cyber risk information is communicated, catering to diverse stakeholder needs within an organization. After the selection, the system will generate reports which summarize aggregate loss expectancy.

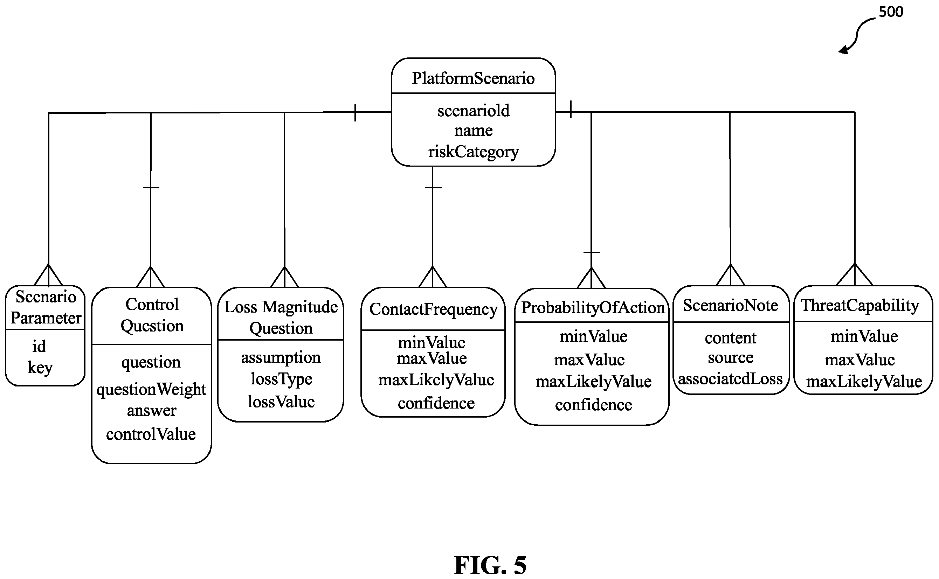

FIG.5 illustrates a flow diagram 500 representation of exemplary scenarios for forecasting the frequency and magnitude of cyber risk, in accordance with an embodiment of the present disclosure.

| **Entity** | **Purpose** |
|---|---|
| **PlatformScenario** | Entity that defines the scenario. Contains attributes like the Scenario name, the risk category associated with the scenario and associations to key entities that account for Cost, Frequency and Susceptibility |
| **ControlQuestion** | This entity is a question specific to a scenario that helps determine the resistance strength of the tenant organization. **The set of business questions associated with a scenario is crafted by the risk research entities.** |
| **Loss Magnitude Question** | Is a business question (Ex: Annual revenue) specific to a scenario that is answered by the tenant. **The answers to these questions help quantify the Primary and Secondary losses.** |
| | **The set of business questions associated with a scenario is crafted by the risk research entities.** |
| **Scenario Parameter** | Contains the attributes that a scenario is tagged against, the attributes being Business Function, Application, Threat type, Threat Motivation associated with a risk Scenario |
| **Contact Frequency** | Contains the probability of the minimum, most likely and maximum values of contact frequency node in the FAIR model for a specific scenario. |
| | **The contact frequency is loaded by the risk research entities for platform scenarios.** |
| **Probability of Action** | Contains the probability of the minimum, most likely and maximum values of probability of action node in the FAIR model for a specific scenario. |
| | **The probability of action is loaded by the risk research entities for platform scenarios.** |
| **Scenario Note** | A scenario note refers to the content used by the risk research entities when populating scenarios |
| **Threat Capability** | Contains the probability of the minimum, most likely and maximum values of threat capability node in the FAIR model for a specific scenario. **The threat capability is loaded by the risk research entities for platform scenarios.** |

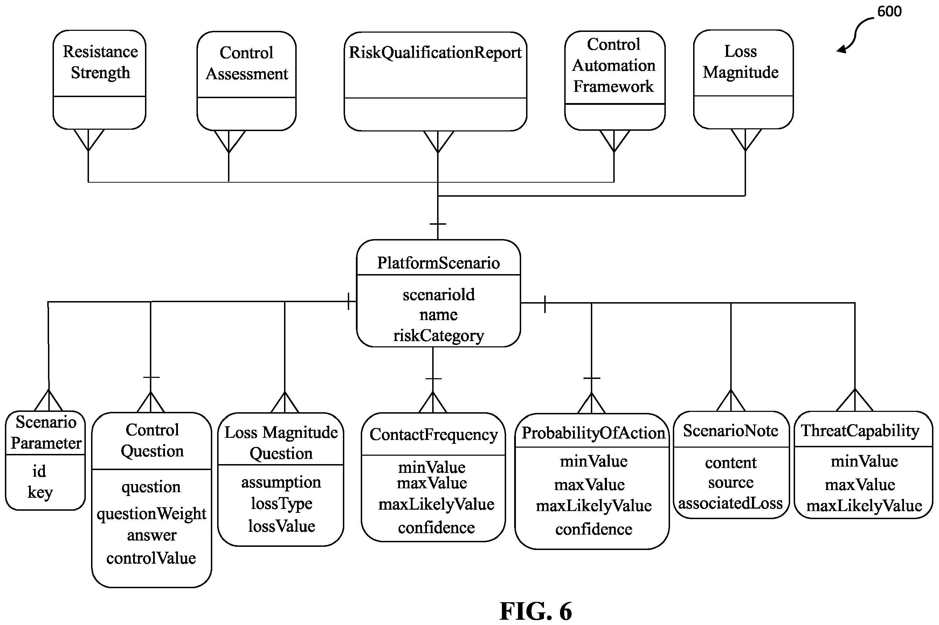

FIG.6 illustrates a block diagram 600 representation of an exemplary tenant scenarios indicating entities used for customizing platform scenario, in accordance with an embodiment of the present disclosure.

Tenants can choose to either extend and customize Platform scenarios or create custom scenarios.

The table listed below explains the purpose of entities not covered in the section on Platform scenarios.

| **Entity** | **Purpose** |
|---|---|
| Resistance Strength | Contains the probability of the minimum, most likely and maximum values of resistance strength node in the FAIR model for a specific scenario. **The value is entered for custom scenarios created by a tenant in the event of the customer not having control questions.** |
| Loss Magnitude | Contains the probability of the minimum, most likely and maximum values for the primary and secondary loss nodes. **The value is entered for custom scenarios created by a tenant in the event of the customer not having loss questions.** |
| Risk Quantification Report | The output of evaluation of a risk scenario. The output contains the magnitude of loss and the details of the scenario used during quantification |
| Control Automation Framework | The Control Automation Framework contains the state of controls in the enterprise that has a bearing the quantification of a risk scenario. These control states will feed as input to the parameters affecting resistance strength, these indicators are normally extracted automatically, they do not require any manual intervention |
| Control Assessment | Stores the output of control assessments performed within the enterprise enabling the ability to calculate resistance for a scenario. |

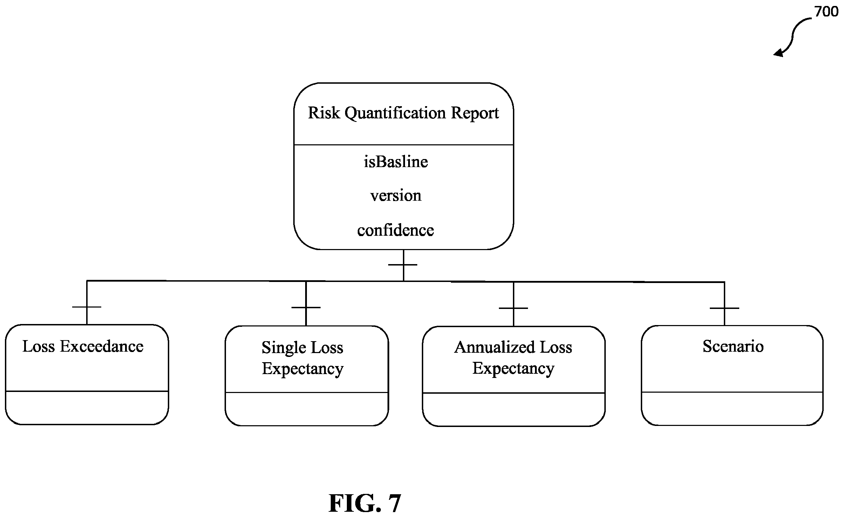

FIG.7 illustrates a summarize view 700 of a risk quantification report, in accordance with an embodiment of the present disclosure.

| **Entity** | **Purpose** |
|---|---|
| Single Loss Expectancy | Contains the minimum, most likely and maximum monetary values expected from the occurrence of a risk on an asset |
| Annualized Loss Expectancy | Contains the minimum, most likely and maximum monetary values expected on an asset due to a risk over the period of a year |
| Loss Exceedance | Contains data that signifies the probability of a loss exceeding a certain amount |
| Scenario | A copy of the scenario used to generate the Risk Quantification Report |

The present disclosure provides certain uses and advantages over the existing state of the arts and the same has been enumerated below:
- The present disclosure performs a holistic analysis that includes a wide array of factors such as threat capability, resistance strength, primary and secondary loss magnitude, and more. This broad perspective provides a more accurate picture of the overall cyber risk landscape.
- The present disclosure generates detailed insights into both individual loss scenarios and aggregated scenarios. This depth of detail allows for precise risk identification and management.
- The present disclosure uses machine learning models to adapt to changing data inputs. As cyber threat landscapes evolve, the system can adjust its analysis to reflect new information, ensuring that the analysis remains relevant and accurate.
- The present disclosure provides quantitative estimates of cyber risk, expressed in financial terms. This enables decision-makers to understand the potential financial impact of different scenarios, assisting them in cost-effective mitigation strategy planning.
- The present disclosure enables users to interact with the system, thereby enabling them to select specific scenarios for analysis and choosing their preferred reporting modes. This flexibility allows different stakeholders to access and understand the information they need.
- The present disclosure helps organizations anticipate and prepare for potential cyber threats. By understanding the potential frequency and magnitude of different loss scenarios, organizations can take proactive steps to strengthen their cyber defenses and reduce their overall risk exposure.
- The present disclosure can be applied to various domains and industries, providing valuable insights to organizations of all sizes and types.
- The present disclosure supports informed decision-making by providing actionable insights about the potential impacts of various cyber threats. This empowers organizations to prioritize their resources effectively, focusing on the areas of highest risk.

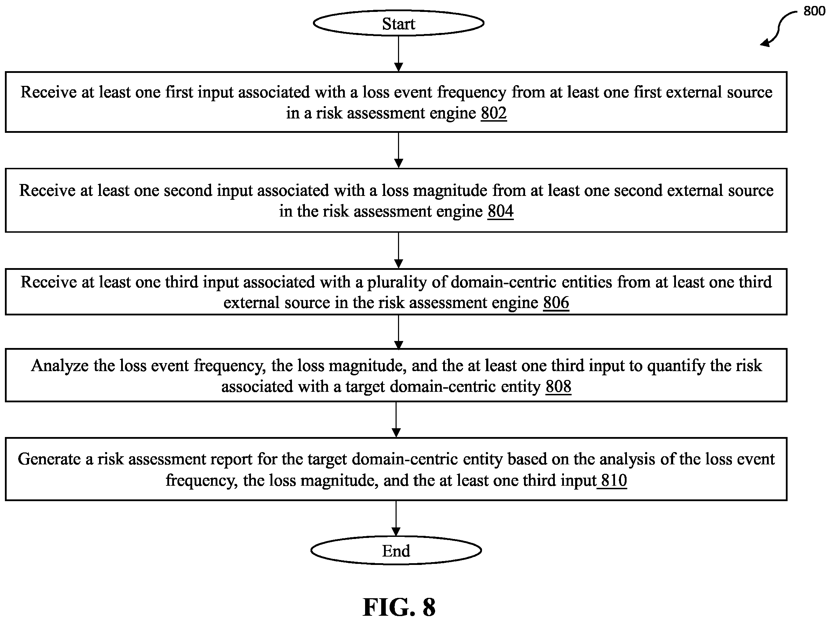

FIG. 8 illustrates a process flow diagram for quantifying a domain-centric risk, in accordance with an embodiment of the present disclosure. As illustrated in FIG.8, the process flow 800 begins at step 802.

At step 802, the processor 102A is configured to receive at least one first input associated with a loss event frequency from at least one first external source in a Risk assessment engine 106. In the context of risk analysis, a "loss event" usually refers to an incident that leads to a loss, whether it's financial, data, reputation, etc. The frequency of loss events refers to how often these incidents occur within a given period. The data about loss event frequency is not generated within the system itself but rather it comes from an "external source". This could be a separate database, another system, or even a real-world data feed. The nature of this source would depend on the specific implementation of the system, but the key point is that it's outside of the system that houses processor 102A. The data from the external source is received by the processor and subsequently passed to the Risk Assessment Engine (106). This engine could be a separate component of the system or a software module running on the processor, which is designed to analyze data relating to risk. It uses the loss event frequency data as one input in its calculations or risk models.

In an example, a cybersecurity risk assessment platform used by a large company is used to predict and assess the risk level associated with various types of cybersecurity threats, such as malware attacks, data breaches, and phishing scams. The processor (102A) in this platform could be set up to receive data from an external source like an Intrusion Detection System (IDS). The IDS continually monitors the company's network for signs of potential security breaches and logs any incidents it detects. For instance, over the course of a month, the IDS might detect 50 instances of attempted unauthorized access to the network, 30 instances of suspicious email activity indicative of a potential phishing attempt, and 10 instances of malware detection. Each of these is a "loss event" as they represent incidents that could lead to a loss, in this case, a loss of data or network security. Therefore, the "first input associated with a loss event frequency" that the processor receives would be these numbers: 50 attempted unauthorized accesses, 30 potential phishing attempts, and 10 malware detections. This data, which comes from the IDS (the external source), provides an indication of how frequently loss events are occurring in the company's network. This information is then passed to the Risk Assessment Engine (106), which could be a software module in the platform that processes this data along with other inputs to calculate the overall risk level associated with cybersecurity threats for the company. The engine might, for example, weigh the frequency of different types of loss events differently based on how severe their impact would be, or it might use statistical models to predict how these frequencies are likely to change in the future. Therefore, at step 802, the processor is configured to receive these numbers (the loss event frequency) from the IDS (the external source), and pass them to the Risk Assessment Engine for analysis.

At step 804, the processor 102A is configured to receive at least one second input associated with a Loss Magnitude from at least one second external source in the Risk assessment engine 106. Step 804 of the process involves the processor 102A receiving a specific form of data, such as the second input. The second input may be associated with the "Loss Magnitude". Which refers to the potential severity of a loss if a given risk were to occur. This data, or "second input", originates from what is a second external source. The second external source may refer to a data source that is external to the processor 102A and Risk Assessment Engine 106. These external sources could range from other databases, software systems, or potentially even manual data inputs, as long as they provide the necessary data about the Loss Magnitude. The Risk Assessment Engine (106) represents the part of the system designed to analyze and calculate the risk associated with certain scenarios or events. In Step 804, the processor 102A, having been programmed to do so, furnishes the Risk Assessment Engine 106 with the required data about Loss Magnitude.

It would be appreciated by the person skilled in the art that potential severity of a loss is used by the Risk Assessment Engine 106 to perform its risk analysis. This could include statistical analysis, risk simulation, or any number of risk analysis methods. The result is a more precise understanding of what the impact of a risk event could be, thus enabling better risk management decisions.

In an example, the second external source is a database containing the historical data of security breaches within a similar industry. The "Loss Magnitude" in this case could refer to the financial loss experienced by companies due to specific types of security breaches. For instance, let's say this database shows that a specific type of security breach - like a ransomware attack - has, on average, resulted in $2 million in losses for companies within the same industry in the past year. The processor (102A) would retrieve this data (the $2 million figure) from the database (the second external source) and input it into the Risk Assessment Engine (106). The Risk Assessment Engine (106), which is working on the risk analysis, would then use this figure as part of its calculations. If the company is attempting to assess its vulnerability to a ransomware attack, for example, this Loss Magnitude would be a critical part of that risk quantification - if the company was hit by such an attack, the potential financial loss could be around $2 million.

At step 806, the processor is configured to receive at least one third input associated with a plurality of domain-centric entities from at least one third external source in the Risk assessment engine.

In this step, the processor 102A is set up to receive additional input, i.e. third input. The third input is related to domain-centric entities, which could refer to specific aspects or sections of an organization or system. For example, in a business environment, domain-centric entities might include different departments such as IT, finance, or human resources. In a computer network, domain-centric entities could refer to various subsystems or components like servers, databases, or network routers. The third input associated with these domain-centric entities is obtained from another external source (the third external source), which could be another database, a system log, or even manual input from a system administrator. The exact nature of this third input would depend on what kind of risk is being assessed. For example, it could contain data on the specific vulnerabilities of different departments to certain types of risks, or it could include information on previous incidents or breaches that have occurred within these domain-centric entities. Once this third input is received by the processor, it is also incorporated into the Risk Assessment Engine. The Engine would then use all three types of input (the loss event frequency, the loss magnitude, and the third input) to calculate and assess the risk associated with the domain-centric entity under consideration. This step of the process is critical as it allows for a more detailed and nuanced risk assessment that takes into account the specific characteristics and vulnerabilities of different domain-centric entities. This can result in a more accurate and useful risk assessment report.

At step 808, the processor 102A is configured to analyze the loss event frequency, the loss magnitude, and the at least one third input to quantify the risk associated with a target domain-centric entity.

In this step, the processor 102A is set up to perform a risk analysis based on the various types of inputs it has received. The received input includes:
- Loss Event Frequency: This refers to the rate at which certain loss events, or incidents that result in a loss, occur. This could be anything from cybersecurity breaches to equipment failure. This information can be used to estimate how often such events might happen in the future.
- Loss Magnitude: This refers to the severity or the impact of the loss events. It quantifies the degree of loss each event can cause. This might involve considering financial losses, downtime, damage to reputation, or other relevant factors.
- Third Input: This input is associated with domain-centric entities, which are specific components or areas of an organization or system. This could include information on the vulnerabilities of these entities, their importance to the overall operation, or their history of loss events.

Once the processor 102A has these inputs, it's set up to analyze them to calculate the risk associated with a target domain-centric entity. This would involve applying a risk calculation or assessment algorithm, which would consider all of these inputs. For example, one simple risk calculation might multiply the loss event frequency by the loss magnitude to give a basic estimate of the total expected loss over a given period. This could then be adjusted based on the third input. If a domain-centric entity has particular vulnerabilities or has experienced many loss events in the past, the risk score might be increased.

At step 810, the processor 102A is configured to generate a risk assessment report for the target domain-centric entity based on the analysis of the loss event frequency, the loss magnitude, and the at least one third input.

In this step, the processor (referred to as 102A) is designed to create a risk assessment report based on the analysis it has performed using the various inputs it has received.

Let's look at what each part of this involves:
- Risk Assessment Report: This is a comprehensive document that presents the estimated risk for a specific target domain-centric entity (a particular component or area of an organization or system). This report would typically include detailed information about the calculated risk, including the factors that contributed to the risk level, and potential suggestions for mitigation strategies.
- Based on the Analysis: The report isn't created out of thin air. It's built directly from the risk analysis that the processor has performed. This analysis has considered the frequency and severity of potential loss events, as well as specific information about the target domain-centric entity.

In an embodiment, the processor 102A takes all of the calculated data and assembles it into a cohesive, readable format. It may include the raw risk score, a breakdown of the contributing factors, historical trend data, comparisons to other entities or industry averages, and potentially recommendations for reducing the risk.

The format and contents of the report will largely depend on the specific requirements of the organization and the intended audience for the report. It's designed to provide valuable insights to decision-makers, helping them understand the risk landscape and make informed choices about where to allocate resources for risk mitigation.

In an example a financial institution, where the target domain-centric entity is a specific online banking system. Here's how the processor could create a risk assessment report:
The processor received inputs about the loss event frequency from an Intrusion Detection System (IDS), suggesting that this online banking system experiences unauthorized access attempts on average 10 times a day.

Secondly, the processor received the loss magnitude data from a risk research entity indicating that each successful unauthorized access event might lead to an average financial loss of $10,000 due to fraudulent transactions.

Lastly, the processor also received information about this specific online banking system from a domain research entity that this system is central to the bank's operations and handles about 5,000 customer transactions per day.

Based on these inputs, the processor performs a risk analysis. It might use a risk calculation method such as multiplying the loss event frequency by the loss magnitude, taking into account the importance of the banking system. So, in this case, the daily risk could be quantified as 10 (attempted breaches) x $10,000 (average loss per breach) = $100,000.

The processor 102A may then be configured to create a risk assessment report for the online banking system. The report might include:
- A summary of the quantified risk: "The online banking system faces a potential daily risk of $100,000 due to unauthorized access attempts."
- Detailed breakdown of the contributing factors: "This figure is based on an average of 10 unauthorized access attempts per day, with each successful breach leading to an estimated loss of $10,000."
- Information about the system: "The online banking system is a critical part of our operations, handling approximately 5,000 transactions daily."
- Potential mitigation strategies: "To reduce this risk, we could consider implementing additional security measures, such as multi-factor authentication, regular system security audits, and user education programs."

The processor 102A would then send this report to the relevant stakeholders in the financial institution who would use this information to make decisions about how to best manage and mitigate this risk.

While considerable emphasis has been placed herein on the disclosed embodiments, it will be appreciated that many embodiments can be made and that many changes can be made to the embodiments without departing from the principles of the present disclosure. These and other changes in the embodiments of the present disclosure will be apparent to those skilled in the art, whereby it is to be understood that the foregoing descriptive matter to be implemented is illustrative and non-limiting.

## Claims

1. A method to quantify a domain-centric risk, the method comprising:
receiving, at a processor, at least one first input associated with a loss event frequency from at least one first external source in a Risk assessment engine;
receiving, by the processor, at least one second input associated with a Loss Magnitude from at least one second external source in the Risk assessment engine;
receiving, by the processor, at least one third input associated with a plurality of domain-centric entities from at least one third external source in the Risk assessment engine;
analyzing, by the processor, the loss event frequency, the loss magnitude, and the at least one third input to quantify the risk associated with a target domain-centric entity; and
generating, by the processor, a risk assessment report for the target domain-centric entity based on the analysis of the loss event frequency, the loss magnitude, and the at least one third input.

2. The method as claimed in claim 1, wherein the method comprises receiving, by the processor, at least one score associated with a Vulnerability from the at least one second external source in the Risk assessment engine.

3. The method as claimed in claim 2, wherein the at least one first input associated with the loss event frequency is received to facilitate the determination of a threat event frequency in the Risk assessment engine, wherein the threat event frequency and the vulnerability facilitate the determination of the loss event frequency in the Risk assessment engine.

4. The method as claimed in claim 1, wherein the at least one first external source comprises at least one from among an Intrusion Detection System (IDS), a Security Information and Event Management (SIEM) tool, a Managed Detection and Response (MDR) tool, an Extended Detection and Response (XDR) tool.

5. The method as claimed in claim 1, wherein the receiving of the at least one score associated with the Vulnerability comprises of:
receiving, at the processor, a threat score to determine a threat capability associated with the vulnerability; and
receiving, at the processor, a susceptibility score and a control score to determine a resistance strength and difficulty associated with the vulnerability.

6. The method as claimed in claim 5, wherein the threat score, the susceptibility score, and the control score are received from an external vulnerability database.

7. The method as claimed in claim 1, wherein the at least one second input associated with the loss magnitude comprises a domain-centric loss data.

8. The method as claimed in claim 1, wherein the at least one second external source comprises one or more risk research entities, and one or more risk indicating models.

9. The method as claimed in claim 1, wherein the at least one third external source comprises one or more domain research entities.

10. The method as claimed in claim 1, further comprises notifying, by the processor, the risk assessment report to at least one user associated with the target domain-centric entity.

11. A system for quantifying a domain-centric risk, comprising:
a processor; and
a memory, the memory coupled to the processor, the memory storing instructions being executed by the processor to:
receive at least one first input associated with a loss event frequency from at least one first external source in a Risk assessment engine;
receive at least one second input associated with a Loss Magnitude from at least one second external source in the Risk assessment engine;
receive at least one third input associated with a plurality of domain-centric entities from at least one third external source in the Risk assessment engine;
analyze the loss event frequency, the loss magnitude, and the at least one third input to quantify the risk associated with a target domain-centric entity; and
generate a risk assessment report for the target domain-centric entity based on the analysis of the loss event frequency, the loss magnitude, and the at least one third input.

12. The system as claimed in claim 11, wherein the processor is further configured to receive at least one score associated with a Vulnerability from the at least one second external source in the Risk assessment engine.

13. The system as claimed in claim 12, wherein the processor is configured such that at least one first input associated with the loss event frequency is received to facilitate the determination of a threat event frequency in the Risk assessment engine, wherein the threat event frequency and the vulnerability facilitate the determination of the loss event frequency in the Risk assessment engine.

14. The system as claimed in claim 11, wherein the at least one first external source comprises at least one from among an Intrusion Detection System (IDS), a Security Information and Event Management (SIEM) tool, a Managed Detection and Response (MDR) tool, an Extended Detection and Response (XDR) tool.

15. The system as claimed in claim 11, wherein to receive the at least one score associated with the Vulnerability, the processor is configured to:
receive a threat score to determine a threat capability associated with the vulnerability; and
receive a susceptibility score and a control score to determine a resistance strength and difficulty associated with the vulnerability.

16. The system as claimed in claim 15, wherein the threat score, the susceptibility score, and the control score are received from an external vulnerability database.

17. The system as claimed in claim 11, wherein at least one second input associated with the loss magnitude comprises a domain-centric loss data.

18. The system as claimed in claim 11, wherein the at least one second external source comprises one or more risk research entities, and one or more risk indicating models.

19. The system as claimed in claim 11, wherein the at least one third external source comprises one or more domain research entities.

20. A non-transitory computer readable storage medium storing instruction for providing quantifying a domain-centric risk, the instructions comprising executable code which, when executed by a processor, causes the processor to:
receive at least one first input associated with a loss event frequency from at least one first external source in a Risk assessment engine;
receive at least one second input associated with a Loss Magnitude from at least one second external source in the Risk assessment engine;
receive at least one third input associated with a plurality of domain-centric entities from at least one third external source in the Risk assessment engine;
analyze the loss event frequency, the loss magnitude, and the at least one third input to quantify the risk associated with a target domain-centric entity; and
generate a risk assessment report for the target domain-centric entity based on the analysis of the loss event frequency, the loss magnitude, and the at least one third input.
